# EUROPEAN PATENT SPECIFICATION

(11) **EP 2 226 464 B1**
(45) Date of publication and mention of the grant of the patent: **26.03.2014**
(21) Application number: 10000567.7
(22) Date of filing: 21.01.2010
(51) Int. Cl.: E06B 9/84, E06B 9/54, E05F 3/14

(54) **Viscous braking device, in particular for roller screens**
Viskose-Bremsvorrichtung, insbesondere für Rollläden
Dispositif de freinage visqueux en particulier pour volets roulants

(30) Priority: 02.03.2009 IT TO20090150
(43) Date of publication of application: 08.09.2010
(73) Proprietor: Pronema S.r.l., 28060 Comignago (NO) (IT)
(72) Inventor: Martinotti, Gianmarco, 28060 Comignago (NO) (IT)
(74) Representative: Garavelli, Paolo

(56) References cited:
- EP-A- 1 557 526
- WO-A-03/058020
- DE-A1- 4 320 393
- US-A- 4 535 829

## Description

The present invention refers to a viscous braking device adapted in particular to be used for braking rolling devices, such as rollers or the like, for example having wound thereon rolls of various materials to be used for covering, repairing or protecting, like the mosquito nets.

For explanation purposed, the invention will be described as applied to the field of roller screens such as mosquito nets, but it will be immediately obvious that the device of the invention can be applied to any object in which the dampening problem must be solved, when closing a rolling device, such as an obscuring screen for a window or a wound cloth.

In their classical arrangement, such systems (not shown, because known in the art) are made of a hollow roller, containing on one side a rolling spring, in which such roller is suitable to wind, in the smallest space possible, the screening cloth. Upon the complete extension of the cloth, the rolling spring is very loaded, since its purpose is taking back the cloth to its rest position without efforts. However, given the high spring charge, the roller re-winding occurs suddenly and brusquely, and this could imply dangers for a user, such as squashing the hands, or anyway a violent impact with noise. Other prior art devices are disclosed in documents US-A-4535829, DE-A-4320393, US-A-6059008 and US-A-4535829. In particular, document WO03/058020 discloses a viscous braking device according to the preamble of Claim 1.

Object of the present invention is solving the above prior art problems, by providing a device suitable to allow on one hand the free sliding of the cloth when opening, and on the other hand the braking of the cloth return when closing, generated by the spring load.

A further object of the present invention is providing a device as mentioned above that can be manufactured with a very small number of pieces, facilitating its assembling operations and thereby reducing its related costs.

Another object of the present invention is providing a device as mentioned above that has reduced overall dimensions.

A further object of the present invention is providing a device as mentioned above that allows its easy configuration depending on the desired braking effect and the type of roller screen to which it must be applied.

The above and other objects and advantages of the invention, as will appear from the following description, are obtained with a viscous braking device as claimed in claim 1. Preferred embodiments and non-trivial variations of the present invention are the subject matter of the dependent claims.

It will be immediately obvious that numerous variations and modifications (for example related to shape, sizes, arrangements and parts with equivalent functionality) without departing from the scope of the enclosed claims.

The present invention will be better described by some preferred embodiments thereof, provided as a non-limiting example, with reference to the enclosed drawings, in which:
- Figure 1 shows a perspective and partially sectioned view of a preferred embodiment of the braking device according to the present invention;
- Figure 2 shows an exploded perspective view of the braking device of Figure 1;
- Figure 3 shows a perspective and partially sectioned view of another preferred embodiment of the braking device according to the present invention; and
- Figure 4 shows an exploded perspective view of the braking device of FIG. 3.

With reference to the Figures, a preferred embodiment of the viscous braking device of the present invention is shown and described.

As previously stated, the viscous braking device 1 of the invention is used with rolling elements, in particular for mosquito nets: such elements could be composed, in a non-limiting way, of a winding roller around which a cloth is wound, such as for example the net-shaped cloth for a mosquito net.

In the following description, conventionally the external casing will be called "stator", similarly to what happens in an electric motor, while the internal element will be called "rotor". It is clear that this is simply a convention, because what is important is the motion between the two parties. For example, also for electric motors (like in electric fans for ceilings), the rotating part is the external one, though remaining the "stator" of the device.

The device 1 of the invention substantially comprises:
- at least one stator 3 containing viscous fluid;
- at least one rotor 5 contained inside the stator 3;
   at least one monodirectional revolving means 7, preferably made as at least one unidirectional roller bearing, operatively and coaxially coupled with the rotor 5 to allow the viscous braking of the rolling elements in a first rotating direction around a rotation axis R-R of the rotor 5 inside the stator 3 and allow a free sliding of the rolling elements in a second rotating direction opposite to the first rotating direction in which the rotor 5 integrally rotates with the stator 3 around such rotation axis R-R. In particular, the monodirectional revolving means 7 are arranged so that their own allowed rotation direction is in agreement with the second rotating direction around the rotation axis R-R so that stator 3 and rotor 5 freely and integrally rotate, allowing to unwind the roller screen connected to the stator 3. The monodirectional revolving means 7 are instead prevented in their rotation along the first rotating direction around the rotation axis R-R: in this case, therefore, during the roller rotation generated by known elastic means, such as for example at least one torsion spring, for winding the roller screen around the roller itself, the rotor 5 is compelled to rotate relatively to the stator 3 realising the viscous braking.

For such purpose, at least the stator 3 is adapted to be contained and fastened inside the winding roller of the rolling element, in order to simplify at a maximum the installation and not to affect the aesthetic appearance of the global device.

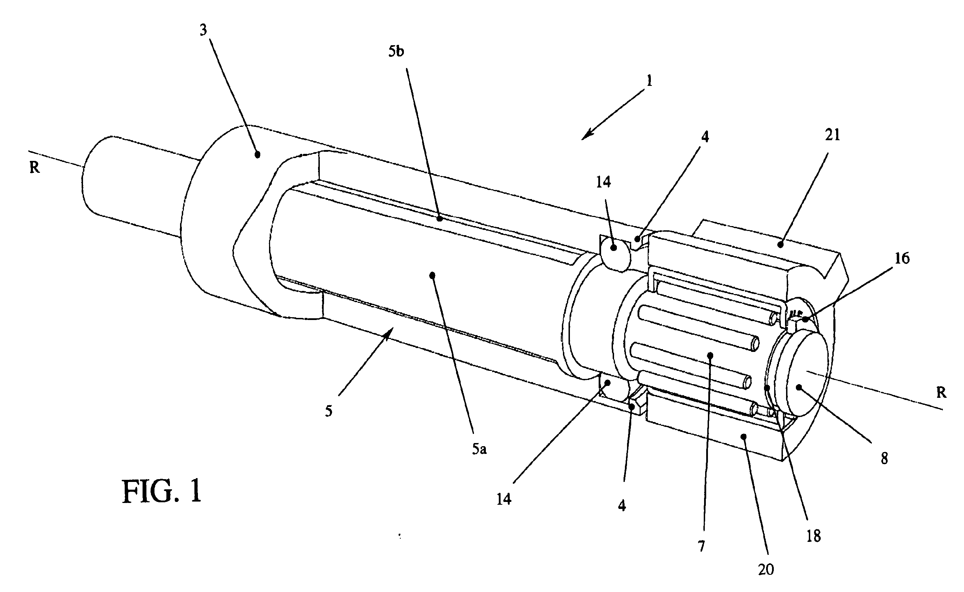

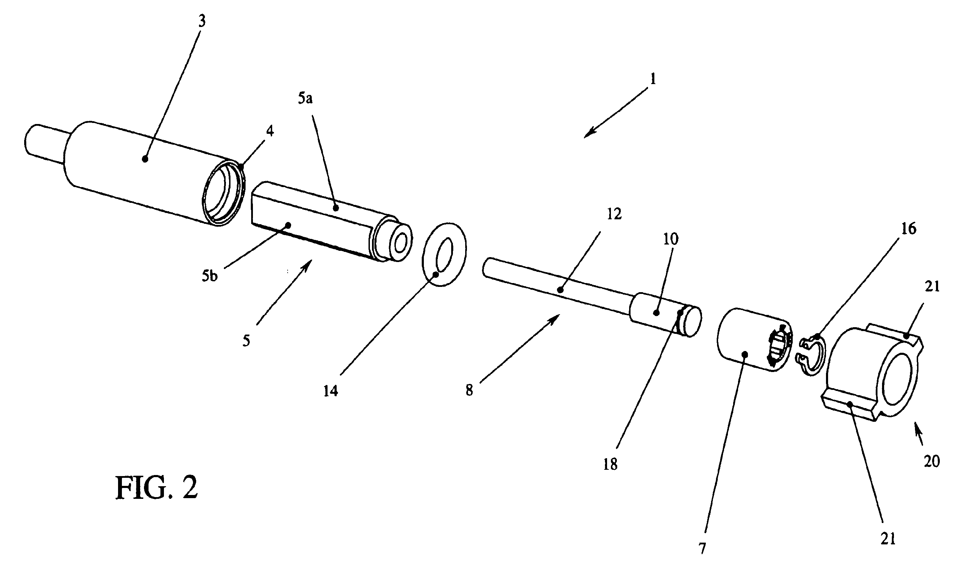

In particular, the stator 3, that is the container of the viscous fluid, in the embodiment shown in Figures 1 to 4, is equipped with at least one undercut 4 that allows the elastic assembly of the rotor 5 inside it. Moreover, the rotor 5 can be keyed-in or rotating on at least one rotation shaft 8 shared with the monodirectional revolving means 7. In particular, the rotation shaft 8 is longitudinally divided into at least one first portion 10 that performs the double function of providing support to the monodirectional revolving means 7 and providing an abutment for the rotor 5, and a second portion 12 with smaller diameter with respect to the first portion 10 that is the support of the rotor 5 when it rotates.

Between the monodirectional revolving means 7 and the rotor 5, sealing means can be interposed, such as for example at least one annular gasket 14, to prevent the viscous fluid from going out of the device 1: obviously, the sealing means can be made in any other way suitable for such purpose and, for example, can be composed of at least two annular gaskets or two lip-, labyrinth-shaped gasket, etc.

Fastening of the monodirectional revolving means 7 and the first portion 10 of the rotation shaft 8 can be performed with any means suitable for such purpose, for example an O-ring 16 suitably keyed-in on a suitable recess 18 obtained on the external surface of such first portion 10.

The rotor 5, instead, in the preferred embodiment shown, is the part performing the actual braking task, and is equipped with at least one external shaped profile that has the double function of increasing the viscous fluid turbulence and operating as storage means for the fluid: in particular, the shaped profile is composed of at least two portions having a surface 5a shaped as a sector of cylinder alternated with two portions 5b having a plane surface.

In addition to the above mentioned basic elements, the device 1 of the invention further comprises at least one drum 20 suitable for internally house monodirectional revolving means 7; externally, instead, the drum 20 is equipped with fastening means, preferably made as at least one pair of diametrically opposite projections 21, on the fixed part of a supporting frame for the whole system: obviously, the drum 20 itself must have enough mechanical resistance to be stiffly keyed-in in a suitable seat of such frame. In this way, once having placed the device 1, and in particular the stator 3, inside a roller of a roller screen and having operatively connected it through the drum 20 to the fixed part of a supporting frame, it is possible to make the final operating configuration of the mosquito net, or other systems of this type, in a simple, quick and efficient way.

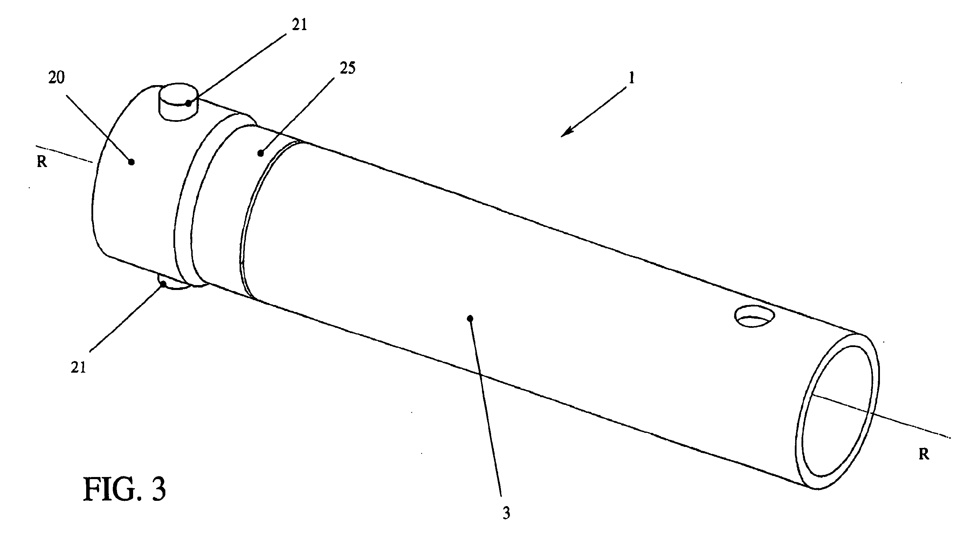

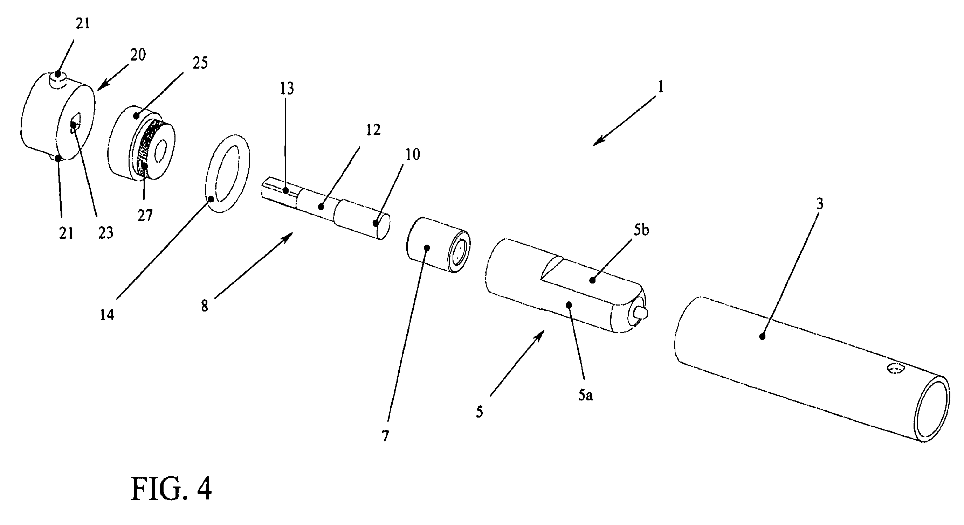

With reference in particular to Figures 3 and 4, it is possible to note that in an alternative embodiment of the device 1 according to the present invention, a fastening end 13 of the rotation shaft 8 is keyed-in on the drum 20 inside a quadrangular seat 23 of this latter one, such shaft 8 passing inside an assembling drum 25 having at least one threaded portion 27 to allow its connection to the stator 3.

As regards the viscous fluid with which the device 1 of the invention operates, it can be (preferably, but not exclusively) high-viscosity oil, for example 100.000 cSt oil, or a grease, used in some viscous-dynamic brakes in order to facilitate the operation of the sealing means 14. However, the preferable choice remains an oil, since, in order to be able to create a device with a force tending to zero when its speed tends to zero, it is necessary to use a liquid and not a solid, though extremely yieldable. It must be noted that, due to the use of the viscous braking, the device 1 according to the present invention has a resisting force that is inversely proportional to the rotation speed, in order to perform an efficient braking when the spring of the roller screen is very loaded (complete cloth extension) and not to block the rewinding when the rewinding force is minimum (end of rewinding).

Advantageously, the device 1 according to the present invention can be equipped with one of a plurality of rotors 5, each one of which is equipped with a peculiar shaped profile aimed for a particular viscous fluid being used: in this way, it is possible to perform a plurality of couplings between shaped profile of the rotor 5 and viscous fluid in order to cover a wide variety of braking forces with which the device 1 can be equipped, and make this latter one extremely versatile when used and easy to be configured depending on the intensity of the braking force that has to be obtained.

As clearly appears from the above description of a preferred application, the present invention provides for several application variations in the most different fields. The basic principle on which it is based, in fact, is, easily but importantly, the presence of a kinematic chain of the fluid-dynamic braking system that is essentially composed of a moving part, adapted to transmit force torques with rightward or leftward movement depending on the opening or closing phase, and a fluid-dynamic brake that is made of one or multiple viscous friction stages, each composed of a stator and a rotor.

Numerous variations of the invention are also possible, as replacement of the monodirectional revolving means 7, suitable for disengaging the braking torque when the curtain rotation direction is reversed, in order to avoid having a braking force during the closing phase.

## Claims

1. Viscous braking device (1) for rolling elements, in particular for mosquito nets, comprising:
- at least one stator (3) containing viscous fluid;
- at least one rotor (5) contained inside said stator (3);
- at least one monodirectional revolving means (7) operatively and coaxially coupled with said rotor (5) to allow a viscous braking of said rolling elements in a first rotating direction around a rotation axis (R-R) of said rotor (5) inside said stator (3) and allow a free sliding of said rolling elements in a second rotating direction opposite to said first rotating direction in which said rotor (5) integrally rotates with said stator (3) around said rotation axis (R-R), said rotor (5) being equipped with an external shaped profile adapted to increase a turbulence of said viscous fluid and to operate as storage for said viscous fluid, **characterised in that**: said monodirectional revolving means (7) is at least one unidirectional roller bearing; and **in that**
said external shaped profile is composed of at least two portions (5a) having a surface shaped as a cylinder sector alternated with two portions (5b) having a plane surface.

2. Viscous braking device (1) according to claim 1, **characterised in that** said stator (3) is equipped with at least one undercut (4) adapted to allow an elastic assembly of said rotor (5) inside said stator (3).

3. Viscous braking device (1) according to claim 1, **characterised in that** said rotor (5) is keyed-in or rotating on at least one rotation shaft (8) shared with said monodirectional revolving means (7).

4. Viscous braking device (1) according to claim 3, **characterised in that** said rotation shaft (8) is longitudinally divided into at least one first portion (10) for support of said monodirectional revolving means (7) and for abutment of said rotor (5), and into a second portion (12) with smaller diameter with respect to said first portion (10) to support a rotation of said rotor (5).

5. Viscous braking device (1) according to any one of the previous claims, **characterised in that** between said monodirectional revolving means (7) and said rotor (5) sealing means are interposed, adapted to prevent said viscous fluid from going out of said device (1).

6. Viscous braking device (1) according to any one of the previous claims, **characterised in that** it comprises at least one drum (20) adapted to internally house said monodirectional revolving means (7), said drum (20) being externally equipped with fastening means to a fixed part of a supporting frame.

7. Viscous braking device (1) according to any one of the previous claims, **characterised in that** a fastening end (13) of said rotation shaft (8) is keyed-in onto said drum (20) inside a quadrangular seat (23) of said drum (20), said shaft (8) passing inside an assembling drum (25) having at least one threaded portion (27) to allow a connection with said stator (3).

8. Set of a viscous braking device (1) according to any one of the previous claims and a plurality of rotors (5) and viscous fluids, **characterised in that** it is equipped with one of the plurality of said rotors (5), each one of which being equipped with a peculiar shaped profile aimed for a particular one of the plurality of said viscous fluids in order to make a plurality of couplings between shaped profile of said rotors (5) and said viscous fluids.

## Patentansprüche

1. Viskose Bremsvorrichtung (1) für Aufrollelemente, insbesondere für Moskitonetze, die folgendes enthält:
- mindestens einen Ständer (3), der eine viskose Flüssigkeit enthält;
- mindestens einen Läufer (5), der im genannten Ständer (3) enthalten ist;
- mindestens eine umschließende einseitig gerichtete Vorrichtung (7), die operativ und koaxial mit dem genannten Läufer (5) verbunden ist, um die viskose Bremsung der genannten Aufrollelemente in einer ersten Drehrichtung um eine Drehachse (R-R) des genannten Läufers (5) im genannten Ständer (3) zu ermöglichen und einen freien Lauf der genannten Aufrollelemente in einer zweiten Drehrichtung zu ermöglichen, die entgegengesetzt zur genannten ersten Drehrichtung ist, in der sich der genannte Läufer (5) in einem Stück mit dem genannten Ständer (3) um die genannte Drehachse (R-R) dreht, der genannte Läufer (5) ist mit einem externen Formprofil ausgestattet, das dazu dient, eine Turbolenz der genannten viskosen Flüssigkeit zu erhöhen und als Speicher für die genannte viskose Flüssigkeit zu dienen,
und ist **dadurch gekennzeichnet, dass** die genannte umschließende einseitig gerichtete Vorrichtung (7) aus mindestens einem unidirektionalen Rollenlager besteht; und dadurch dass das genannte externe Formprofil aus mindestens zwei Teilen (5a) mit Zylindersektorflächen, die sich mit zwei Teilen (5b) mit ebener Oberfläche abwechseln, besteht.

2. Viskose Bremsvorrichtung (1) gemäß Patentanspruch 1, die **dadurch gekennzeichnet ist, dass** der genannte Ständer (3) mit mindestens einer Hinterschneidung (4) ausgestattet ist, die dazu dient, eine elastische Montage des genannten Läufers (5) im genannten Ständer (3) zu ermöglichen.

3. Viskose Bremsvorrichtung (1) gemäß Patentanspruch 1, die **dadurch gekennzeichnet ist, dass** der genannte Läufer (5) mit mindestens einer Drehwelle (8), die mit der genannten umschließenden einseitig gerichteten Vorrichtung (7) geteilt wird, verbunden ist oder sich auf ihr dreht.

4. Viskose Bremsvorrichtung (1) gemäß Patentanspruch 3, die **dadurch gekennzeichnet ist, dass** die genannte Drehwelle (8) in Längsrichtung in mindestens einen ersten Trägerteil (10) der genannten umschließenden einseitig gerichteten Vorrichtung (7) und in einen Anschlag für den genannten Läufer (5) geteilt wird, sowie in einen zweiten Teil (12) mit einem kleineren Durchmesser als der genannte erste sich drehende Trägerteil (10) des genannten Läufers (5).

5. Viskose Bremsvorrichtung (1) gemäß einem beliebigen der vorhergehenden Patentansprüche, die **dadurch gekennzeichnet ist, dass** zwischen der genannten umschließenden einseitigen Vorrichtung (7) und dem genannten Läufer (5) Rückhaltevorrichtungen angebracht sind, die dazu dienen, ein Austreten der genannten viskosen Flüssigkeit aus der genannten Vorrichtung (1) zu verhindern.

6. Viskose Bremsvorrichtung (1) gemäß einem beliebigen der vorhergehenden Patentansprüche, die **dadurch gekennzeichnet ist, dass** sie mindestens eine Trommel (20) enthält, die dazu dient, in ihrem Inneren die genannte umschließende einseitig gerichtete Vorrichtung (7) zu enthalten, die genannte Trommel (20) ist extern mit Befestigungsvorrichtungen an einem festen Teil eines Stützrahmens ausgestattet.

7. Viskose Bremsvorrichtung (1) gemäß einem beliebigen der vorhergehenden Patentansprüche, die **dadurch gekennzeichnet ist, dass** ein Befestigungsende (13) der genannten Drehwelle (8) mit der genannten Trommel (20) in einer viereckigen Aufnahme (23) der genannten Trommel (20) verbunden ist, die genannte durch eine Montagetrommel (25) gehende Welle (8) hat mindestens einen Gewindeteil (27), um eine Verbindung-mit dem genannten Ständer (3) zu ermöglichen.

8. Gruppe einer viskosen Bremsvorrichtung (1) gemäß einem beliebigen der vorhergehenden Patentansprüche mit mehreren Läufern (5) und viskosen Flüssigkeiten, die **dadurch gekennzeichnet ist, dass** sie mit mehreren der genannten Läufer (5) ausgestattet ist, jeder dieser Läufer ist mit einem besonderen Formprofil ausgestattet, das für eine besondere der vielen genannten viskosen Flüssigkeiten bestimmt ist, um mehrere Paare zwischen dem Formprofil der genannten Läufer (5) und der genannten viskosen Flüssigkeiten zu realisieren.

## Revendications

1. Dispositif de freinage visqueux (1) pour éléments à enroulement, en particulier pour moustiquaires, comprenant:
- au moins un stator (3) contenant du fluide visqueux;
- au moins un rotor (5) contenu à l'intérieur dudit stator (3);
- au moins un moyen roulant à sens unique (7) accouplé en mode opératif et en mode coaxial audit rotor (5) pour permettre un freinage visqueux desdits éléments à enroulement dans un premier sens de rotation autour d'un axe de rotation (R-R) dudit rotor (5) à l'intérieur dudit stator (3) et permettre un libre glissement desdits éléments d'enroulement dans un second sens de rotation opposé au premier sens de rotation dans lequel ledit rotor (5) tourne solidairement avec ledit stator (3) autour dudit axe de rotation (R-R), dudit rotor (5) étant doté d'un profil externe façonné apte à augmenter une turbulence dudit fluide visqueux et à servir de magasin pour ledit fluide visqueux,
**caractérisé par le fait que** ledit moyen roulant à sens unique (7) est au moins un galet à roulements unidirectionnel ; et **par le fait que** ledit profil externe façonné est composé d'au moins deux portions (5a) ayant surface à secteur de cylindre alterné avec deux portions (5b) à surface plate.

2. Dispositif de freinage visqueux (1) selon la revendication 1, **caractérisé par le fait que** ledit stator (3) est doté d'au moins une partie en creux (4) apte à permettre un montage élastique dudit rotor (5) à l'intérieur dudit stator (3).

3. Dispositif de freinage visqueux (1) selon la revendication 1, **caractérisé par le fait que** ledit rotor (5) est calé ou tournant sur au moins un arbre de rotation (8) partagé avec ledit moyen roulant à sens unique (7).

4. Dispositif de freinage visqueux (1) selon la revendication 3, **caractérisé par le fait que** ledit arbre de rotation (8) est subdivisé longitudinalement en au moins une première portion (10) de support audit moyen roulant à sens unique (7) et de butée pour ledit rotor (5), et dans une seconde portion (12) de diamètre inférieur par rapport à ladite première portion (10) de support en rotation dudit rotor (5).

5. Dispositif de freinage visqueux (1) selon une quelconque des revendications précédentes, **caractérisé par le fait que** entre ledit moyen roulant à sens unique (7) et ledit rotor (5) sont interposés des moyens de tenue aptes à empêcher une sortie dudit fluide visqueux dudit dispositif (1).

6. Dispositif de freinage visqueux (1) selon une quelconque des revendications précédentes , **caractérisé par** le fait de comprendre au moins un tambour (20) apte à recevoir à l'intérieur ledit moyen roulant à sens unique (7), ledit tambour (20) étant doté à l'extérieur de moyens de fixation à une parie fixe d'un châssis de support.

7. Dispositif de freinage visqueux (1) selon une quelconque des revendications précédentes, **caractérisé par le fait qu'**une extrémité de fixation (13) dudit arbre de rotation (8) est calée sur ledit tambour (20) à l'intérieur d'un logement quadrangulaire (23) dudit tambour (20), dudit arbre (8) passant à l'intérieur d'un tambour de montage (25) ayant au moins une portion filetée (27) pour permettre un raccordement avec ledit stator (3).

8. Ensemble d'un dispositif de freinage visqueux (1) selon une quelconque des revendications précédentes et une pluralité de rotors (5) et fluides visqueux, **caractérisé par** le fait d'être doté d'un de la pluralité desdits rotors (5), chacun desquels étant doté d'un profil particulier façonné destiné à un composant de la pluralité desdits fluides visqueux pour réaliser une pluralité de couplages entre le profil façonné desdits rotors (5) et lesdits fluides visqueux.
